Europäisches Patentamt

European Patent Office

Office européen des brevets

(19)

(11) Veröffentlichungsnummer: **0 075 123**
**A1**

(12) # EUROPÄISCHE PATENTANMELDUNG

(21) Anmeldenummer: 82107771.6

(22) Anmeldetag: 24.08.82

(51) Int. Cl.³: **H 04 M 11/02**

(30) Priorität: 17.09.81 DE 3137024

(43) Veröffentlichungstag der Anmeldung: 30.03.83
Patentblatt 83/13

(84) Benannte Vertragsstaaten: **AT DE FR**

(71) Anmelder: **SIEMENS AKTIENGESELLSCHAFT, Berlin
und München Wittelsbacherplatz 2,
D-8000 München 2 (DE)**

(72) Erfinder: **Künzel, Roland, Dipl.-Ing., Irisweg 4,
D-8039 Puchheim (DE)**

(54) **Kennungsmeldesystem zur vollautomatischen Teilnehmerstandorterfassung in einem Mobilkommunikationsnetz,
insbesondere in einem drahtgebundenen Mobilkommunikationsnetz.**

(57) Es wird ein Kennungsmeldesystem vorgeschlagen, für
das ein Kennungsgeber (1) und ein Kennungsempfänger (2)
vorgesehen sind, wobei der Kennungsgeber (1) eine mobile
Einrichtung ist, die jeweils kennungsmäßig einem Teilnehmer oder einer Teilnehmergruppe individuell zugeordnet
ist, und wobei der Kennungsempfänger (2) jeweils ortsfest
in oder bei einem Teilnehmerendgerät (3) angeordnet ist.
Der Kennungsgeber (1) gibt ein Teilnehmer- oder Teilnehmergruppenindividuelles Kennungssignal drahtlos ab, dessen Informationsinhalt durch eine Programmierung des
Kennungsgebers (1) festlegbar ist. Der betreffende Kennungsempfänger (2), in dessen Einwirkungsbereich ein
Kennungssignal (K1; K2) abgegeben wird, empfängt dieses
drahtlos, verarbeitet es und leitet eine daraus entstandene
Kennungsmeldung an ein Standortinformationssystem (4),
das Bestandteil des Mobilkommunikationsnetzes ist, weiter.

SIEMENS AKTIENGESELLSCHAFT
Berlin und München

0075123

Unser Zeichen

VPA
81 P 7 1 1 5 E

Kennungsmeldesystem zur vollautomatischen Teilnehmerstandorterfassung in einem Mobilkommunikationsnetz, insbesondere
in einem drahtgebundenen Mobilkommunikationsnetz

Die vorliegende Erfindung betrifft ein Kennungsmeldesystem
zur vollautomatischen Teilnehmerstandorterfassung in einem
Mobilkommunikationsnetz, insbesondere in einem drahtgebundenen Mobilkommunikationsnetz.

In derartigen Netzen, beispielsweise Nebenstellenanlagen,
ist es oftmals erforderlich, die Standorte von Teilnehmern
zum Zwecke einer automatischen Anrufnachführung zu erfassen. Ein geeignetes Verfahren zur Erfassung eines aktuellen
Standortes eines derartigen Teilnehmers besteht darin, zu
einer Einrichtung, vorzugsweise derjenigen Teilnehmerendstelle, in deren Einzugsbereich sich der betreffende Teilnehmer augenblicklich befindet, von einem von dem Teilnehmer mitgeführten Meldungsgeber aus eine diesem Teilnehmer
individuell zugeteilte Kennung in Form eines drahtlos zu
übertragenden Kennungssignals an die betreffende Teilnehmerendstelle, beispielsweise einen Fernsprechapparat, zu
übertragen, von wo aus die Kennungsmeldung an eine zentrale Standorterfassungseinrichtung innerhalb des betreffenden
Kommunikationsnetzes übertragen wird. Diese Standorterfassungseinrichtung, die vorzugsweise einen Rechner enthält,
kann dann alle erforderlichen Befehle bilden, die einer
Vermittlungsstelle innnerhalb des betreffenden Netzes zum
Zwecke einer Anrufnachführung zu dem betreffenden Standort
des gemeldeten Teilnehmers zu übermitteln sind.

Zu diesem Zwecke sind alle dafür in Betracht zu ziehenden

Pap

Teilnehmerendstellen oder Teilnehmerendgeräte mit einem Kennungsempfänger auszurüsten, der eine von einem Kennungsgeber abgegebene Kennungsmeldung aufnehmen, ggf. vorverarbeiten und an eine zentrale Einrichtung innerhalb des betreffenden Kommunikationsnetzes weiterleiten kann.

In einem derartigen System ist es wünschenswert, daß die Teilnehmer, die für eine Anrufnachführung in Betracht kommen, ständig während ihrer Verfügbarkeitzeit einen automatisch arbeitenden Kennungsgeber mit sich führen, sofern vermieden werden soll, daß solche Teilnehmer jedesmal dann, wenn sie in den Einzugsbereich eines anderen Teilnehmerendgerätes kommen, dem Netz durch irgendwelche Bedienungshandgriffe an dem betreffenden Teilnehmerendgerät ihren aktuellen Standort mittels einer ihnen individuell zugeteilten Teilnehmerkennung bekanntgeben. Am vorteilhaftesten ist für einen derartigen Zweck zweifelsfrei ein drahtloser Kennungsgeber, der die Kennungsmeldung automatisch und ständig wiederholend ausstrahlt.

Aus "telecom report" (1980), Heft 1 ist ein schnurloses Infrarot-Telefon bekannt, das schnurlos Nachrichten senden und empfangen kann. In "Proceedings of the IEEE", Vol. 67, No. 11, Nov.- 79 ist ein unter dem Titel "Wireless In-House Data Communication via Diffuse Infrared Radiation" veröffentliches Datenkommunikationssystem beschrieben, das ebenfalls drahtlos Nachrichten übertragen kann.

Solche Systeme sehen allerdings keine Einrichtungen vor, die eine automatische Anrufnachführung in irgendeiner Weise ermöglichen.

Der vorliegenden Erfindung liegt die Aufgabe zugrunde, ein Kennungsmeldesystem zur vollautomatischen Teilnehmerstandorterfassung in einem Mobilkommunikationsnetz, insbesondere in einem drahtgebundenen Mobilkommunikationsnetz zu schaffen, das eine vollautomatische, d. h. keinerlei Bedienungshandgriffe erfordernde Anmeldung eines Teilnehmers bei einem Teilnehmerendgerät, in dessen Einzugsbereich sich der betreffende Teilnehmer augenblicklich aufhält, vornehmen kann. Aufgabengemäß soll ein Kennungsgeber, der von dem Teilnehmer während seiner Verfügbarkeitszeit ständig mitgeführt wird, geringe Abmessungen, ein geringes Gewicht und einen niedrigen Stromverbrauch haben. Der Betrieb eines solchen Kennunggebers soll weitgehend wartungsfrei sein. In dem erfindungsgemäßen Kennungsmeldesystem sollen sich außerdem aufgabengemäß gleichartige Kennungsgeber mehrerer Teilnehmer nicht in unzulässiger Weise stören.

Die der Erfindung zugrundeliegende Aufgabe wird durch ein Kennungsmeldesystem nach dem Oberbegriff des Patentanspruchs 1 gelöst, das durch die in dem kennzeichnenden Teil des Patentanspruchs 1 angegebenen Merkmale charakterisiert ist.

Die Erfindung bietet den Vorteil einer vollautomatischen, keinerlei Bedienungshandgriffe durch die betreffenden Teilnehmer erfordernden ständigen Standorterfassung, so daß für solche Teilnehmer ankommende Anrufe vollautomatisch zu einem in dem betreffenden Aufenthaltsbereich stehenden Teilnehmerendgerät nachgeführt werden können.

Vorteilhafte Weiterbildungen der Erfindung sind durch die in den Unteransprüchen angegebenen Merkmale gekennzeichnet.

Im folgenden wird die Erfindung anhand mehrerer, Ausführungsbeispiele für die Erfindung betreffender Figuren im einzelnen beschrieben.

Fig. 1 zeigt eine schematische Darstellung der Zusammenwirkung eines Kennungsgebers, eines Teilnehmerendgerätes mit einem Kennungssignaldetektor und einer Vermittlungsstelle mit einer dieser zugeordneten Standorterfassungseinrichtung.

Fig. 2 zeigt das Blockschaltbild eines Ausführungsbeispiels für einen erfindungsgemäßen Kennungsgeber.

Fig. 3 zeigt das Blockschaltbild eines bevorzugten Ausführungsbeispiels für einen erfindungsgemäßen Kennungssignaldetektor.

Fig. 4 zeigt schematisch einen Zeitplan für einen Kollisionbereich KB, in dem zwei Kennungssignale K1, K2 kollidieren.

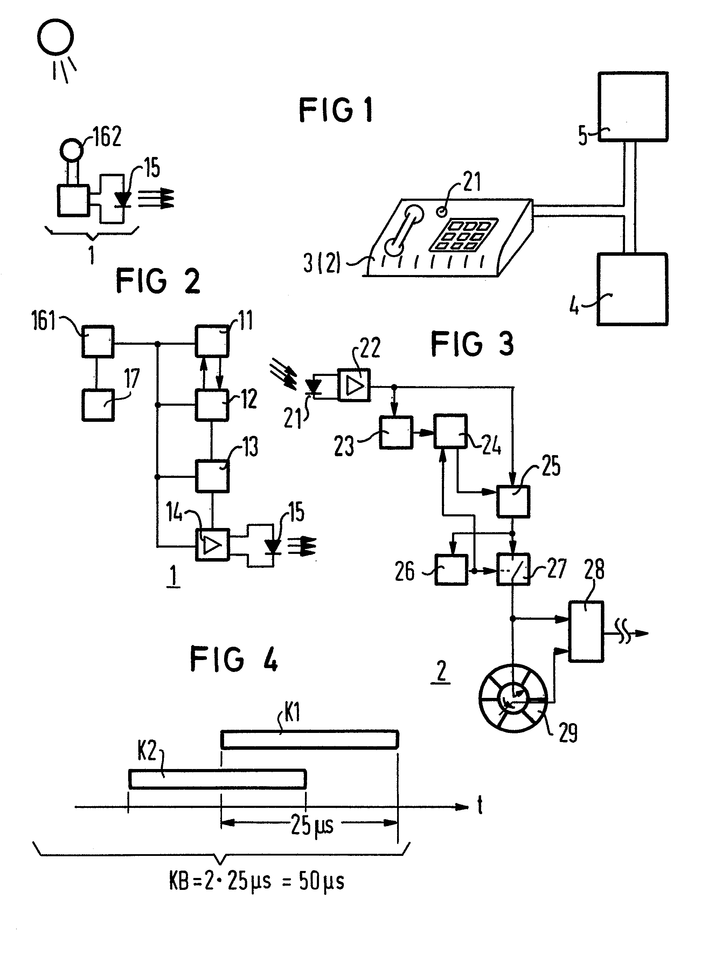

Wie bereits erläutert, zeigt Fig. 1 eine schematische Darstellung der Zusammenwirkung eines Kennungsgebers, eines Teilnehmerendgerätes mit einem Kennungssignaldetektor und einer Vermittlungsstelle mit einer dieser zugeordneten Standorterfassungseinrichtung. Der Kennungsgeber 1 ist eine mobile Einrichtung, die jeweils kennungsmäßig einem Teilnehmer oder einer Teilnehmergruppe individuell zugeordnet ist. Der Kennungsempfänger 2 ist jeweils in oder bei einem Teilnehmerendgerät, in dem gezeigten Ausführungsbeispiel in einem als Fernsprechteilnehmerstation fungierenden Teilnehmerendgerät 3 angeordnet. Der Kennungsgeber 1 gibt ein teilnehmer- oder teilnehmergruppenindividuelles Kennungssignal, z. B. K1, dessen Informationsinhalt durch eine Programmierung des Kennungsgebers 1 festlegbar ist, drahtlos ab. Der betreffende Kennungsempfänger 2, in dessen Einwirkungsbereich ein Kennungssignal, beispielsweise K1, abgegeben wird, empfängt dieses drahtlos, verarbeitet es und leitet eine daraus entstandene Kennungsmeldung an ein Standortinformationssystem 4 ab, das Bestandteil des Mobilkommunikationsnetzes mit einer Vermittlungsstelle 5 ist, weiter.

Der Kennungsgeber 1 enthält eine Einrichtung, die die Wiederholzeit für das Senden des betreffenden Kennungssignals mit Schwankungen beaufschlagt, um wiederholte zeitliche Kollisionen mit Sendevorgängen weiterer Kennungsgeber in dem Kommunikationsnetz (vergl. Fig. 4) vermeidbar zu ma-

0075123
81 P 7115 E

chen. Diese Einrichtung besteht erfindungsgemäß aus einem Zufallsgenerator, vorzugsweise einem Pseudozufallsgenerator 11, wie er in Fig. 2 gezeigt ist. Vorteilhafterweise ist dieser Pseudozufallsgenerator 11 als ein an sich bekanntes Schieberegister mit einer sog. nichtlinearen Rückkopplung realisiert. Der Kennungsgeber 1 kann zu seiner Energieversorgung ein an sich bekanntes Netzteil 161 enthalten, dem ein Energiespeicher 17 nachgeordnet ist, um Spannungsschwankungen, die durch Leistungsschwankungen bedingt sind, auffangen zu können, womit die verschiedenen Schaltkreise des Kennungsgebers 1 mit einer konstanten Spannung mittels des Energiespeichers und einer an sich bekannten Spannungsregelschaltung versorgt werden können. Vorteilhafter für die Betriebsweise des Kennungsgebers 1 ist jedoch eine Ausführung, bei der zur Energieversorgung der verschiedenen Schaltkreise des Kennungsgebers 1 eine Solarzelle 162 mit nachgeschaltetem Energiespeicher 17 und einer Spannungsregelschaltung vorgesehen ist, vergl. Fig. 1. Der Energiespeicher 17 kann sowohl ein Kondensator als auch eine wiederaufladbare Batterie sein.

In dem Kennungsgeber 1 ist zur Abgabe des Kennungssignals, z. B. K1, ein Kennungssignalsender 15 vorgesehen. Der Kennungsempfänger 2 enthält zum Empfangen des Kennungssignals einen Kennungssignaldetektor 21, der in dem in Fig. 1 gezeigten Ausführungsbeispiel vorteilhafterweise in das Teilnehmerendgerät 3 eingebaut ist. Der Kennungssignalsender 15 ist vorteilhafterweise, wie auch in Fig. 1 gezeigt, als eine Infrarot-Lumineszenzdiode ausgeführt. Entsprechend ist der Kennungssignaldetektor in diesem Falle als ein an sich bekannter Infrarotdetektor ausgeführt. Es ist selbstverständlich auch möglich, die Übertragung der Kennungssignale mittels Ultraschall vorzunehmen, wenn dies aus Gründen der Verhältnisse in den betreffenden Räumlichkeiten, beispielsweise in Fabrikhallen, erforderlich sein sollte. Bei einer jeweils geeigneten Mehrfachanordnung von Ultraschallempfangswandlern als Kennungssignaldetektoren ist bei Verwen-

0075123
81 P 7115 E

dung eines Ultraschallsendewandlers in dem Kennungsgeber 1 das Ultraschallprinzip für die Kennungsübertragung vorteilhaft anwendbar.

Ebenfalls ist es möglich, das Kennungssignal über einen als Funkwellensender, vorzugsweise für den Mikrowellenbereich, realisierten Kennungssignalsender abzustrahlen. Entsprechend ist dann jeweils - falls erforderlich - eine geeignete Mehrfachanordnung von als Funkwellenempfänger realisierte Kennungssignaldetektoren vorzusehen.

Die gemäß Fig. 1 verwendete Solarzelle 162 als Stromversorgungsquelle für die Schaltkreise des Kennungsgebers 1 ist vorteilhafterweise als eine solche mit einer lichtempfindlichen Fläche von beispielsweise 1 mm$^2$ ausgeführt. Dies ist deswegen ausreichend, weil die verwendeten Schaltungsprinzipien für den Kennungsgeber 1 und die damit verwendbaren Schaltkreise einen verhältnismäßig geringen Energieaufwand haben. Der Stromverbrauch des elektronischen Kennungsgebers 1 wird vollständig durch die elektrische Leistung der Solarzelle 162 gedeckt.

Erfindungsgemäß ist in dem Kennungsgeber 1 ein Kennungssignalgenerator 13 vorgesehen, der einen Programmierteil zum Programmieren des Informationsinhaltes des betreffenden Kennungssignals, z. B. K1, hat, der nur in der Fertigung oder durch befugtes Wartungspersonal programmiert werden kann. Dieser Kennungssignalgenerator 13 erzeugt ein binär codiertes Kennungssignal, das außer der eigentlichen Kennungsinformation, die beispielsweise die Teilnehmerrufnummer des betreffenden Teilnehmers, die betreffende Ortskennzahl und die betreffende Fernkennzahl beinhaltet, weitere Information, nämlich zumindest eine Synchronisierinformation und eine Prüfsummeninformation zur Sicherstellung einer unverfälschten Signalübertragung enthält. Dieses binär codierte Kennungssignal umfaßt gemäß einer vorteilhaften Weiterbildung der Erfindung eine feste Anzahl von Bits, bei-

0075123

81 P 7115 E

spielsweise 50 Bits.

Der Kennungsgeber 1 enthält einen Taktgeber 12, der wirksam sowohl mit dem Pseudozufallsgenerator 11 als auch mit dem Kennungssignalgenerator 13 zusammengeschaltet ist, und einen Signalverstärker 14, der dem Kennungssignalgenerator 13 nachgeordnet ist und dessen Signalausgang mit dem Kennungssignalsender 15 verbunden ist. Der Taktgeber 12 ist vorzugsweise quarzgesteuert.

Der Kennungsempfänger 2 enthält einen Empfangssignalverstärker 22, dessen Signaleingang mit dem Kennungssignaldetektor 21 verbunden ist, eine Synchronisiereinrichtung 23, die dem Empfangssignalverstärker 22 nachgeordnet ist, einen Taktgenerator 24, der der Synchronisiereinrichtung 23 nachgeordnet ist, einen Serien/Parallel-Wandler 25, der mit dem Signalausgang des Empfangssignalverstärkers 22 und mit einem Signalausgang des Taktgenerators 24 verbunden ist, eine Quersummenprüfeinrichtung 26, die dem Serien/Parallel-Wandler 25 nachgeordnet ist, eine Kennungssignal-Übernahmeeinrichtung 27, die sowohl an den Serien/Parallel-Wandler 25 als auch an die Quersummenprüfeinrichtung 26 angeschlossen ist, einen Vergleicher 28, der an die Kennungssignal-Übernahmeeinrichtung 27 angeschlossen ist, und einen zyklischen Speicher 29, dessen Speichereingang mit der Kennungssignal-Übernahmeeinrichtung 27 und dessen Speicherausgang mit einem zweiten Eingang des Vergleichers 28 verbunden ist, vergl. Fig. 3.

Der Taktgenerator 24 ist vorzugsweise ebenfalls quarzgesteuert. Der Vergleicher ist dafür bestimmt, zu prüfen, ob ein einmal empfangenes Kennungssignal, z. B. K2, zumindest ein zweites Mal empfangen worden ist. Das Standortinformationssystem 4, vergl. Fig. 1, untersucht jede eintreffende Kennungsmeldung auf ihre Plausibilität hin, indem die Entfernung von einem bisher gemeldeten Aufenthaltsort des betreffenden Teilnehmers zu einem ggf. neuen Aufenthaltsort dieses Teilnehmers durch die Zeitdifferenz zwischen dem Zeitpunkt der letzten Kennungsmeldung am alten Aufenthaltsort
und dem Zeitpunkt der ersten Kennungsmeldung am neuen Aufenthaltsort geteilt wird. Wenn das Prüfergebnis einen Wert
darstellt, der eine vorgegebene Höchstgrenze überschreitet,
wird die betreffende Kennungsmeldung ignoriert.

Die empfangenen Kennungsmeldungen werden in dem dem Teilnehmerendgerät 3 zugeordneten zyklischen Speicher 29 oder gemäß einem anderen, nicht gezeigten Ausführungsbeispiel in
einem dem Standortinformationssystem 4 zugeordneten zyklischen Speicher abgelegt. Eine Kennungsmeldung wird erst
dann gültig und damit wirksam, wenn sie mindestens zweimal
in dem zyklischen Speicher zu finden ist. Dazu ist vorgesehen, daß der zyklische Speicher jedesmal dann, wenn eine
neue Kennungsmeldung in ihm abgelegt worden ist, die Inhalte aller Speicherplätze in einem kurzen Zyklus dem zweiten
Eingang des Vergleichers zeitlich nacheinander zuführt.

Eine realisierbare Ausführungsform des Kennungsgebers 1 für
ein öffentliches Kommunikationsnetz sieht vor, daß in periodischen Abständen von ca. 100 s 50-bit-Nachrichten in Form
mehrerer Infrarotlichtimpulse von je 0.5 $\mu$s Dauer ausgesendet werden. Das erste und das letzte Bit dienen der Synchronisation. Die restlichen Bits stellen 12 Ziffern im BCD-Code dar. Die ersten 10 Ziffern enthalten die Rufnummerdes
mobilen Teilnehmers einschließlich der notwendigen Vermittlungskennzahlen zur Leitweglenkung, jedoch ohne eine Mobilauscheidungskennzahl, oder Leerstellen (nämlich unwirksame
Ziffern). Die letzten zwei Ziffern werden für die Übertragung einer Prüfsumme oder einer anderen geeigneten Prüfinformation zur Sicherstellung einer unverfälschten Signalübertragung verwendet. Die 50 Bits werden direkt nacheinander ausgesendet. Wenn ein Bit gesetzt ist, wird die Infrarot-Lumineszenzdiode für 0.5 $\mu$s aktiviert, anderenfalls
nicht.

Störungen und fehlerhafte Anmeldungen werden in dem beschriebenen erfindungsgemäßen Kennungsmeldesystem auf verschiedene Weise weitgehend unterdrückt. Die Zeit für das Aussenden eines Kennungsignals ist im Verhältnis zu seiner Wiederholzeit sehr klein. Das Verhältnis beträgt 1:4 000 000. Damit beträgt die Kollisionswahrscheinlichkeit, vergl. Fig. 4, 1 : 1 700. und es kommt im Durchschnitt nur alle 2 Tage zu einer Fehlmeldung, die jedoch automatisch erkannt wird. Damit sich zwei Kennunggeber nicht trotzdem in regelmäßigen Abständen beim Aussenden der Kennungssignale gegenseitig stören, wird der Zeittakt für die Sendewiederholung mit dem Ausgangssignal des Zufallsgenerators in Grenzen von beispielsweise 80 s bis 120 s ständig variiert. Bei einer Wiederholung der (Pseudo)-Zufallsfolge nach beispielsweise 1000 Schritten kommt eine andauernde gegenseitige Störung zweier Kennungsgeber an einem Teilnehmerendgerät im Durchschnitt höchstens einmal in fünf Jahren vor.

Der Kennunsgeber 1 kann vorteilhaft in Form einer Anstecknadel, eines Kugelschreibers, eines Knopfes oder dergl. realisiert werden. Eine weitere vorteilhafte Ausführungsform sieht vor, daß der Kennungsgeber 1 in eine Brille, beispielsweise eine Schutzbrille, oder eine Uhr integriert ist.

24 Patentansprüche
4 Figuren

81 P 7115 E    0075123

Patentansprüche:

1. Kennungsmeldesystem zur vollautomatischen Teilnehmerstandorterfassung in einem Mobilkommunikationsnetz, insbesondere in einem drahtgebundenen Mobilkommunikationsnetz, dadurch g e k e n n z e i c h n e t , daß ein Kennungsge-ber (1) und ein Kennungsempfänger (2) vorgesehen sind, wobei der Kennungsgeber (1) eine mobile Einrichtung ist, die jeweils kennungsmäßig einem Teilnehmer oder einer Teilnehmergruppe individuell zugeordnet ist, und wobei der Kennungsempfänger (2) jeweils ortsfest in oder bei einem Teilnehmerendgerät (3) angeordnet ist, daß der Kennungsgeber (1) ein teilnehmer- oder teilnehmergruppenindividuelles Kennungssignal (z. B. K1) drahtlos abgibt, dessen Informati-onsinhalt durch eine Programmierung des Kennungsgebers (1) festlegbar ist, und daß der betreffende Kennungsempfänger (2), in dessen Einwirkungsbereich ein Kennungssignal (z.B. K1) abgegeben wird, dieses drahtlos empfängt, verarbeitet und eine daraus entstandene Kennungsmeldung an ein Standortinformationssystem (4), das Bestandteil des Mobilkommunikationsnetzes ist, weiterleitet.

2. Kennungsmeldesystem nach Anspruch 1, dadurch g e - k e n n z e i c h n e t , daß der Kennungsgeber (1) eine Einrichtung enthält, die die Wiederholzeit für das Senden des betreffenden Kennungssignals mit Schwankungen beaufschlagt, um zeitliche Kollisionen mit Sendevorgängen weiterer Kennungsgeber (1) in dem Kommunikationsnetz vermeidbar zu machen.

3. Kennungsmeldesystem nach Anspruch 2, dadurch g e - k e n n z e i c h n e t , daß die Einrichtung aus einem an sich bekannten Zufallsgenerator, vorzugsweise einem Pseudozufallsgenerator (11), besteht.

4. Kennungsmeldesystem nach Anspruch 3, dadurch g e -

kennzeichnet , daß der Zufallsgenerator oder Pseudozufallsgenerator (11) als ein an sich bekanntes Schieberegister mit einer sog. nichtlinearen Rückkopplung realisiert ist.

5. Kennungsmeldesystem nach Anspruch 1, dadurch gekennzeichnet , daß in dem Kennungsgeber (1) zu dessen Energieversorgung ein an sich bekanntes Netzteil (161) mit einem diesem nachgeschalteten Energiespeicher (17) enthalten ist.

6. Kennungsmeldesystem nach Anspruch 1, dadurch gekennzeichnet , daß in dem Kennungsgeber (1) zu dessen Energieversorgung eine an sich bekannte Solarzelle (162) mit einem dieser nachgeschalteten Energiespeicher (17) enthalten ist.

7. Kennungsmeldesystem nach Anspruch 5 oder 6, dadurch gekennzeichnet , daß der Energiespeicher (17) ein Kondensator ist.

8. Kennungsmeldesystem nach Anspruch 5 oder 6, dadurch gekennzeichnet , daß der Energiespeicher (17) eine wiederaufladbare Batterie ist.

9. Kennungsmeldesystem nach Anspruch 7 oder 8, dadurch gekennzeichnet , daß dem Energiespeicher (17) eine an sich bekannte Spannungsregelschaltung zugeordnet ist, um den Kennungsgeber (1) mit einer konstanten Betriebsspannung zu dessen Energieversorgung zu versehen.

10. Kennungsmeldesystem nach Anspruch 1, dadurch gekennzeichnet , daß in dem Kennungsgeber (1) zur Abgabe des Kennungssignals (z. B. K1) ein Kennungssignalsender (15) vorgesehen ist und daß der Kennungsempfänger (2) zum Empfangen des Kennungssignals (z. B. K1) einen Kennungssignaldetektor (21) enthält, der vorzugsweise in das Teilnehmerendgerät (3) eingebaut ist.

11. Kennungsmeldesystem nach Anspruch 10, dadurch g e - k e n n z e i c h n e t , daß der Kennungssignalsender (15) eine Infrarot-Lumineszenzdiode ist und daß der Kennungssignaldetektor (21) ein an sich bekannter Infrarot-Detektor ist.

12. Kennungsmeldesystem nach Anspruch 10, dadurch g e - k e n n z e i c h n e t , daß der Kennungssignalsender (15) ein an sich bekannter Ultraschallsendewandler ist und daß der Kennungssignaldetektor (21) ein an sich bekannter Ultraschallempfangswandler ist.

13. Kennungsmeldesystem nach Anspruch 10, dadurch g e - k e n n z e i c h n e t , daß der Kennungssignalsender (15) ein Funkwellensender, vorzugsweise für den Mikrowellenbereich, ist und daß der Kennungssignaldetektor (21) ein an sich bekannter, für den betreffenden Wellenbereich ausgelegter Funkwellenempfänger ist.

14. Kennungsmeldesystem nach Anspruch 1, dadurch g e - k e n n z e i c h n e t , daß in dem Kennungsgeber (1) ein Kennungssignalgenerator (13) vorgesehen ist, der einen Pro- grammierteil zum Programmieren des Informationsinhaltes des betreffenden Kennungssignals (z. B. K1) enthält.

15. Kennungsmeldesystem nach Anspruch 14, dadurch g e - k e n n z e i c h n e t , daß der Kennungssignalgenerator (13) ein binär codiertes Kennungssignal (z. B. K1) erzeugt, das außer der eigentlichen Kennungsinformation, die beispielsweise die Teilnehmerrufnummer des betreffenden Teilnehmers, die betreffende Ortskennzahl und die betreffende Fernkennzahl beinhaltet, weitere Information, nämlich zumindest eine Synchronisierinformation und eine Prüfsummeninfor- mation enthält.

0075123
81 P 7 1 1 5 E

16. Kennungsmeldesystem nach Anspruch 15, dadurch g e - k e n n z e i c h n e t , daß der Kennungssignalgenerator (13) ein binär codiertes Kennungssignal (z. B. K1) erzeugt, das eine feste Anzahl von Bits, vorzugsweise 50 Bits, umfaßt.

17. Kennungsmeldesystem nach Anspruch 1, dadurch g e - k e n n z e i c h n e t , daß der Kennungsgeber (1) einen Taktgeber (12), der wirksam sowohl mit einem Pseudozufallsgenerator (11) als auch mit einem Kennungssignalgenerator (13) zusammengeschaltet ist, und einen Signalverstärker (14), der dem Kennungssignalgenerator (13) nachgeordnet ist und dessen Signalausgang mit einem Kennungssignalsender (15) verbunden ist, enthält.

18. Kennungsmeldesystem nach Anspruch 17, dadurch g e - k e n n z e i c h n e t , daß der Taktgeber (12) quarzgesteuert ist.

19. Kennungsmeldesystem nach Anspruch 1, dadurch g e - k e n n z e i c h n e t , daß der Kennungsempfänger (2) einen Empfangssignalverstärker (22), dessen Signaleingang mit einem Kennungssignaldetektor (21) verbunden ist, eine Synchronisiereinrichtung (23), die dem Empfangssignalverstärker (22) nachgeordnet ist, einen Taktgenerator (24), der der Synchronisiereinrichtung (23) nachgeordnet ist, einen Serien/Parallel-Wandler (25), der mit dem Signalausgang des Empfangssignalverstärkers (22) und mit einem Signalausgang des Taktgenerators (24) verbunden ist, eine Quersummenprüfeinrichtung (26), die dem Serien/Parallel-Wandler (25) nachgeordnet ist, eine Kennungssignal-Übernahmeeinrichtung (27), die sowohl an den Serien/Parallel-Wandler (25) als auch an die Quersummenprüfeinrichtung (26) angeschlossen ist, einen Vergleicher (28), der an die Kennungssignal-Übernahmeeinrichtung (27) angeschlossen ist, und einen zyklischen Speicher (29), dessen Speichereingang mit der Kennungssignal-Übernahmeeinrichtung (27) und dessen Speicherausgang mit einem zweiten Eingang des Vergleichers (28) verbunden ist, enthält.

20. Kennungsmeldesystem nach Anspruch 19, dadurch g e - k e n n z e i c h n e t , daß der Taktgenerator (24) quarzgesteuert ist.

21. Kennungsmeldesystem nach Anspruch 19, dadurch g e - k e n n z e i c h n e t , daß der Vergleicher (28) dafür bestimmt ist, zu prüfen, ob ein einmal empfangenes Kennungssignal (z. B. K1) zumindest ein zweites Mal empfangen worden ist.

22. Kennungsmeldesystem nach Anspruch 1, dadurch g e - k e n n z e i c h n e t , daß das Standortinformationssystem (4) jede eintreffende Kennungsmeldung auf ihre Plausibilität hin untersucht, indem die Entfernung von einem bisher gemeldeten Aufenthalsort des betreffenden Teilnehmers zu einem ggf. neuen Aufenthaltsort dieses Teilnehmers durch die Zeit zwischen der letzten Kennungsmeldung am alten Aufenthaltsort und der ersten Kennungsmeldung am neuen Aufenthaltsort geteilt wird, und daß die betreffende Kennungsmeldung für den Fall ignoriert wird, daß das Prüfergebnis einen Wert darstellt, der eine vorgegebene Höchstgrenze überschreitet.

23. Kennungsmeldesystem nach einem der Ansprüche 1 - 4 und Anspruch 6, dadurch g e k e n n z e i c h n e t , daß der Kennungsgeber (1) in Form einer Anstecknadel, eines Kugelschreibers, eines Knopfes oder dergl. realisiert ist.

24. Kennungsmeldesystem nach einem der Ansprüche 1 - 4 und Anspruch 6, dadurch g e k e n n z e i c h n e t , daß der Kennungsgeber (1) in eine Brille oder eine Uhr intergiert ist.

FIG 1

FIG 2

FIG 3

FIG 4

$KB = 2 \cdot 25\mu s = 50\mu s$

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-4 275 385  (WHITE)  *Insgesamt* | 1,5,8, 10,11, 14,23 | H 04 M  11/02 |
| Y | | 2-4 | |
| A | | 12,13, 15-17, 19,22 | |
| X | US-A-4 225 953  (SIMON et al.)  *Spalte 2, Zeile 9 - Spalte 6, Zeile 15; Spalte 9, Zeilen 3-37* | 1,5,8, 10,12, 14,23 | |
| Y | | 6 | RECHERCHIERTE SACHGEBIETE (Int. Cl. 3) |
| A | | 17-20 | G 08 B<br>G 08 C<br>H 04 M<br>H 04 Q |
| Y | DE-A-2 351 013  (LICENTIA)  *Seite 2, Zeile 14 - Seite 3, Zeile 20; Seite 4, Zeile 16 - Seite 6, Zeile 3* | 2-4 | |
| A | | 1 | |

-/-

Der vorliegende Recherchenbericht wurde für alle Patentansprüche erstellt.

| Recherchenort<br>DEN HAAG | Abschlußdatum der Recherche<br>09-11-1982 | Prüfer<br>LUBERICHS A. |
|---|---|---|

Europäisches
Patentamt

EUROPÄISCHER RECHERCHENBERICHT

0075123

Nummer der Anmeldung

EP 82 10 7771

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-2 929 961  (DEUTSCHE ITT) *Ansprüche* | 6 | |
| A | | 1,8,10 ,11,14 ,17,18 | |
| | --- | | |
| A | US-A-3 118 145  (NEE) *Figur 1* | 1,24 | |
| | --- | | |
| A | DE-A-1 957 488  (TEKADE)  *Seite  2,  Zeilen 5-14; Seite 3, Zeilen 11-18* | 1,15, 22 | |
| | ----- | | |

RECHERCHIERTE
SACHGEBIETE (Int. Cl. ³)

Der vorliegende Recherchenbericht wurde für alle Patentansprüche erstellt.

| Recherchenort DEN HAAG | Abschlußdatum der Recherche 09-11-1982 | Prüfer LUBERICHS A. |
|---|---|---|